# EUROPÄISCHE PATENTSCHRIFT

(11) **EP 1 080 869 B1**
(45) Veröffentlichungstag und Bekanntmachung des Hinweises auf die Patenterteilung: **29.05.2002**
(21) Anmeldenummer: 00116983.8
(22) Anmeldetag: 08.08.2000
(51) Int. Cl.: B29C 51/26

(54) **Heizstation zum Beheizen von Platten aus thermoplastischem Kunststoff**
Heating station for heating plates made of a thermoplastic material
Station de chauffage pour chauffer des plaques en matériau thermoplastique

(30) Priorität: 28.08.1999 DE 19941065
(43) Veröffentlichungstag der Anmeldung: 07.03.2001
(73) Patentinhaber: Illig, Adolf Maschinenbau GmbH & Co., 74081 Heilbronn (DE)
(72) Erfinder: Schwarzmann, Peter, 74081 Heilbronn (DE)

(56) Entgegenhaltungen:
- WO-A-97/47461
- DE-A- 3 225 533
- DE-A- 19 708 716
- DE-C- 19 814 615

## Beschreibung

Die Erfindung betrifft eine Heizstation zum Beheizen von Platten aus thermoplastischem Kunststoff nach der Gattung des Hauptanspruches. Diese Heizstation ist seitlich der Formstation einer Thermoformmaschine angeordnet und kann als Beschickungsstation für eine Transporteinrichtung ausgebildet sein, die zwischen Heizstation und Formstation verläuft. Die Platten werden entweder von einem Stapel aufgenommen und in die Transporteinrichtung eingeführt, die Transporteinrichtung kann aber auch für den abschnittsweisen Transport einer von einer Folienrolle abgezogenen Folienbahn eingesetzt werden, von der die Platten einzeln abgetrennt werden. In der Formstation findet die Verformung der Platten durch Differenzdruck unter Zuhilfenahme einer Form statt.

Bei der Beheizung einer Platte außerhalb der Formstation besteht das Problem, die Platte während des Beheizens auch an den Querrändern einspannen zu müssen, um eine Einschnürung bzw. ein Durchhängen der Platte zu verhindern. Diese Quereinspannung muss während des Transportes in die Formstation gelöst werden und die Klemmeinrichtung ist so zu gestalten, dass der Transport der eingespannten Platte und das Einführen einer neuen Platte in die Transporteinrichtung nicht behindert wird.

Aus der DE 32 25 533 A1 ist eine Vorrichtung bekannt, bei der die Klemmeinrichtung zum Einspannen der Querränder der Platte einerseits aus ortsfesten Querstegen besteht, die an je einem Träger sitzen, der wiederum am Gestell befestigt ist. Andererseits sind an den Trägern Klappleisten montiert, die im Zusammenwirken mit den Querstegen das Einspannen der Platte bewirken. Bei einer Anpassung an eine andere Plattenlänge können diese Träger in Durchlaufrichtung verschoben werden. Dies erfolgt von Hand, und zwar für beide Träger getrennt. Eine genaue zentrische Verstellung ist aufwendig. Wenn bei einer Umrüstung auch zusätzlich eine Anpassung an eine andere Plattenbreite erfolgen soll ist der Austausch der kompletten Querstege und Klappleisten bzw. eine Adaption von zusätzlichen Klemmleisten auf den Klappleisten erforderlich. Dies ist arbeitsaufwendig.

Aus der DE 198 14 615 C1 ist ein höhenbeweglicher verstellbarer Spannrahmen bekannt, der sich in Längs- und Querrichtung stufenlos verstellen lässt und der in die Formstation einer Thermoformmaschine eingebaut ist. Er arbeitet mit einem ortsfesten unteren Spannrahmen zusammen und ist bei dieser Bauweise nicht für den Einsatz in einer der Formstation vorgeschalteten Heizstation einsetzbar, weil dort kein geschlossener unterer Spannrahmen vorliegt und - bedingt durch die Transporteinrichtung - andere Einbauverhältnisse vorliegen.

Der Erfindung liegt die Aufgabe zugrunde, die Heizstation so auszubilden, dass die Einrichtung zum Festspannen der Platte bei gegebener universeller Anpassung an verschiedene Plattengrößen in Längs- und Querrichtung ohne zusätzliche Bauteile bzw. Austauschteile auskommt. Eine Umrüstung sollte rasch vorgenommen werden können ohne aufwendige Montage- und Verstellarbeiten. Gemäß einer Weiterbildung der Erfindung sollten die querverlaufenden Klemmleisten zusätzlich eine Kühlung des quer verlaufenden Plattenrandes über die ganze Breite gegeben sein.

Zur Lösung der Aufgabe werden die Merkmale des Hauptanspruches vorgeschlagen. Hinsichtlich vorteilhafter Weiterbildungen wird auf die Unteransprüche verwiesen.

Der Gegenstand der Erfindung wird nachfolgend anhand der schematischen Zeichnungen näher beschrieben. Es zeigt:
Figur 1 eine Vorderansicht einer Thermoformmaschine
Figur 2 einen Querschnitt durch die Heizstation entlang der Linie B-B in Fig. 1
Figur 3 einen Querschnitt entlang der Linie A-A in Figur 2
Figur 4 eine Draufsicht auf einen Quersteg der Heizstation
Figur 5 eine Weiterbildung der Klemmeinrichtung für die Platte

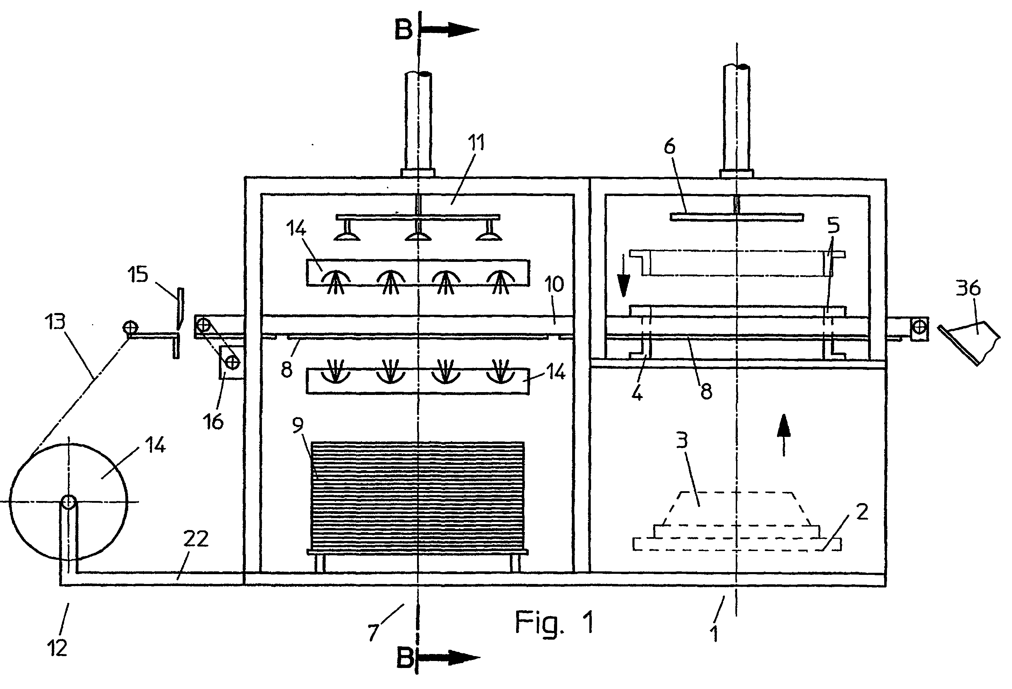

Figur 1 zeigt die Vorderansicht einer Thermoformmaschine, bestehend aus Formstation 1 mit einem höhenbeweglichen Tisch 2 zur Aufnahme einer Tiefziehform 3, zwei Spannrahmen 4, 5 und ggf. einem Streckhelfer 6 sowie aus einer vorgeschalteten Heizstation 7. Diese Heizstation 7 kann gleichzeitig als Beschickungsstation ausgebildet sein, wenn Platten 8 von einem Stapel 9 aufgenommen und an die Transporteinrichtung 10 übergeben werden, die zwischen Heizstation 7 und Formstation 1 verläuft und von einem Antrieb 16 intermittierend bewegt wird. Die Plattenentnahme vom Stapel 9 und die Übergabe an die Transporteinrichtung 10 erfolgen mittels des höhenbeweglichen Plattenhebers 11. Die Thermoformmaschine kann aber auch mit einer Folienrollenaufnahme 12 versehen sein, wobei die Transporteinrichtung 10 einen Abschnitt einer Folienbahn 13 von der Rolle 14 abzieht, der dann von einer Querschneideeinrichtung 15 abgetrennt und in richtige Lage in die Heizstation 7 gebracht wird.

In der Heizstation 7 sind femer mindestens eine, vorzugsweise zwei Heizungen 14 horizontal verschiebbar angeordnet, die entweder eine Fertigbeheizung der Platte 8 vornehmen oder eine Vorbeheizung auf eine bestimmte Plattentemperatur. Im letzteren Fall erfolgt die Fertigbeheizung in der Formstation 1.

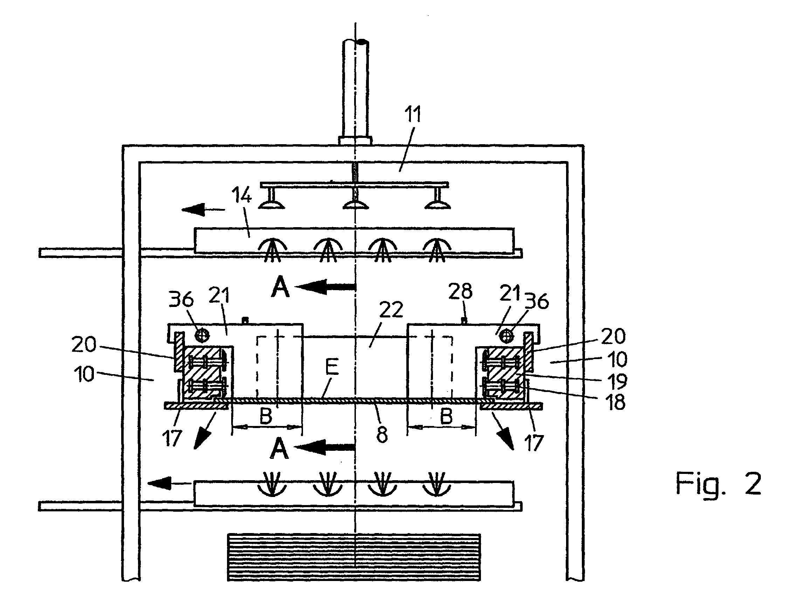

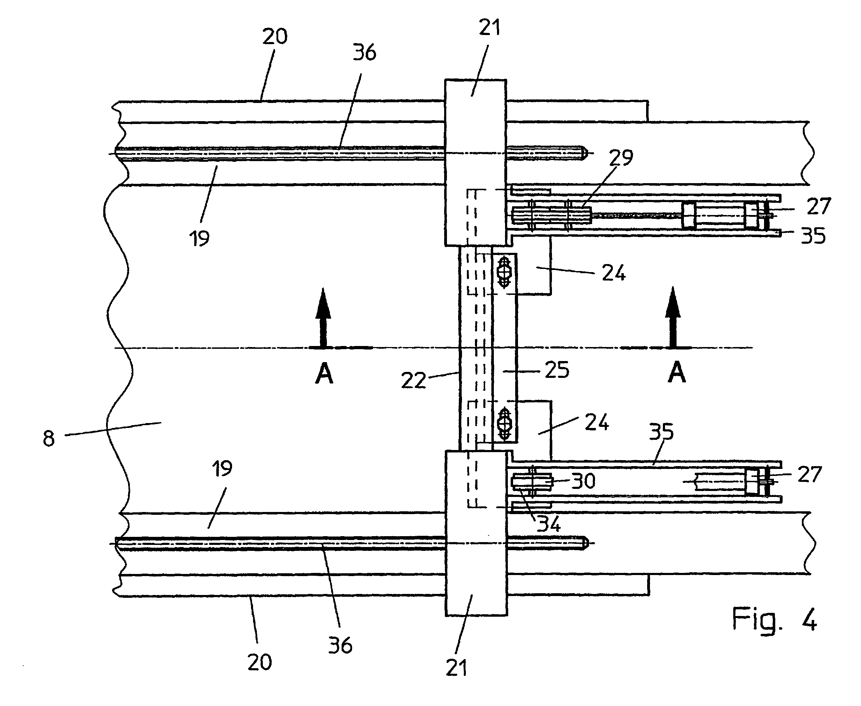

Die nähere Gestaltung der Spanneinrichtung in der Heizstation 7 zeigen die Figuren 2 bis 4. Die Einspannung der Längsseiten der Platte 8 erfolgt (Figur 2) durch Klappleisten 17 gegen die Spitzen der Transportketten 18, die mit den als Führung dienenden Führungsschienen 19 Teil der Transporteinrichtung 10 sind. An jeder Führungsschiene 19 ist eine Leiste 20 befestigt, an dieser und/oder an den Führungsleisten 19 sind je zwei Aufnahmen 21 längsverschiebbar und feststellbar angeordnet sind. Dabei erfolgt die Längsverstellung der vier Aufnahmen 21 vorzugsweise gemeinsam über synchron angetriebene Verstellspindeln 36. Diese Aufnahmen 21 erstrecken sich nach unten bis zur Einspannebene E der Platte 8 und weisen eine Breite B auf, auf der sie die Platte 8 rechts und links in Querrichtung einspannen. Die beiden Aufnahmen 21 sind geschlitzt bzw. zweigeteilt und nehmen zwischen sich eine Querleiste 22 auf in der Weise, dass Aufnahme 21 und Querleiste 22 einen bestimmten Verstellweg zueinander verstellt werden können, dabei die ganze Plattenbreite überbrücken und eine geschlossene Anlage bilden.

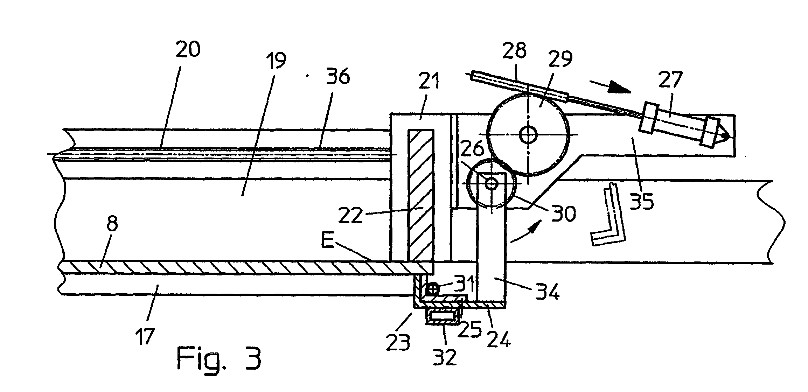

Das Festspannen des quer verlaufenden Plattenrandes gegen die Aufnahmen 21 und die Querleiste 22 erfolgt durch je eine Klappleiste 23, (Fig. 3) die mehrteilig ist und teleskopartig zueinander verschiebbare Klemmleisten 24, 25 aufweist. Im dargestellten Beispiel sind zwei Klemmleisten 24 über einen Träger 34 an je einer an der Aufnahme 21 befestigten Konsole 35 im Drehpunkt 26 gelagert und können über einen Antrieb 27, eine Zahnstange 28 und Zahnräder 29, 30 soweit geschwenkt werden, dass alle Bauteile oberhalb der Einspannebene E zu liegen kommen, sodass der Plattentransport nicht behindert ist. Zwischen den beiden Klemmleisten 24 verläuft überlappend die Klemmleiste 25, formschlüssig oder kraftschlüssig mit beiden verbunden. So ist auch bei einer Breitenveränderung der Transporteinrichtung 10 immer eine Einspannung des quer verlaufenden Plattenrandes über die ganze Breite gegeben. Eine Variante der Schwenkeinrichtung der Klappleiste 23 ist in der Weise denkbar, dass die mittlere Klemmleiste 25 schwenkbar über einen entsprechenden Antrieb an der Querleiste 22 gehalten ist und die beiden anderen Klemmleisten 24 an der Klemmleiste 25 breitenverstellbar angeordnet sind. In diesem Fall ist pro Querleiste 22 nur ein Antrieb erforderlich - die Klappleiste 23 weist aber bei größerer Baubreite eine gewisse Labilität auf.

In Weiterbildung der Erfindung wird vorgeschlagen, alle Klemmleisten 24, 25 zu kühlen, indem Kühlrohre 31, 32 zur Durchleitung eines Kühlmediums an diesen angeordnet sind. Die beiden quer verlaufenden Seitenränder der Platte 8 werden dadurch über die ganze Breite gekühlt, was die Tragfähigkeit der Platte beim Weitertransport positiv beeinflusst.

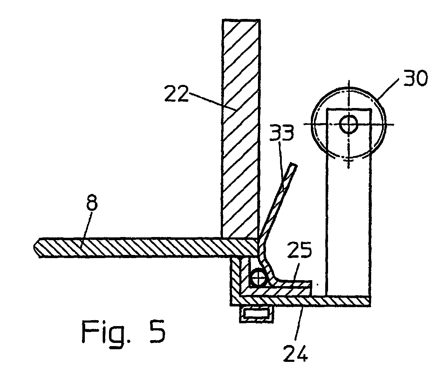

Ferner wird vorgeschlagen, eine der Klemmleisten 24, 25 so auszubilden, dass sie vor dem Festklemmen der Platte 8 eine Lagezentrierung der Platte 8 in Transportrichtung vornimmt. Gemäß Figur 5 ist hierzu an der Klemmleiste 25 eine Leiteinrichtung 33, z.B. in Form eines Bleches, angeordnet, die so geformt ist, dass sie auf den Rand einer über den Quersteg 22 vorstehenden Platte 8 trifft, bevor sie diesen einspannt und so verschiebt, dass beim Festklemmen der Platte 8 eine definierte Lage des quer verlaufenden Plattenrandes gegeben ist. Der Plattenheber 11 ist dazu in bekannter Weise entsprechend nachgiebig ausgebildet.

## Patentansprüche

1. Heizstation zum Beheizen von Platten (8) aus thermoplastischem Kunststoff zum Vorschalten an eine Formstation (1) zu deren Verformung mittels Differenzdruck, mit einer Heizstation (7) und Formstation (1) verbindenden Transporteinrichtung (10) zum Überführen der beheizten Platte (8) und einer Einrichtung zum ringsum Festspannen der Platte (8) während des Beheizens, wobei eine Verstellbarkeit dieser Einrichtung zur Anpassung an verschiedene Größen der Platte (8) bzw. des Folienbahnabschnittes gegeben ist und die Klemmung der Platte (8) an den Längsseiten durch Klappleisten (17) gegen die Spitzen der in Führungsschienen (19) geführten Transportketten (18) erfolgt, **gekennzeichnet durch** vier auf den Führungsschienen (19) längsverschiebbaren Aufnahmen (21) für zwei Querleisten (22), die teleskopartig in den Aufnahmen (21) geführt sind sowie an den Querleisten (22) montierte Klappleisten (23), die aus teleskopartig zueinander verschiebbaren Klemmleisten (24,25) bestehen.

2. Heizstation nach Anspruch 1, **dadurch gekennzeichnet, dass** die vier Aufnahmen (21) synchron über Stellspindeln (36) verstellbar ausgebildet sind.

3. Heizstation nach Anspruch 1 oder 2, **dadurch gekennzeichnet, dass** die Klemmleisten (24,25) bis in eine Lage oberhalb der Einspannebene (E) bewegt werden können

4. Heizstation nach einem der Ansprüche 1 bis 3, **dadurch gekennzeichnet, dass** die Klemmleisten (24,25) mit Kühlrohren (31,32) zur Durchleitung eines Kühlmediums versehen sind.

5. Heizstation nach einem der Ansprüche 1 bis 4, **gekennzeichnet durch** eine an einer der Klemmleisten (24,25) angeordnete Leiteinrichtung (33) zur Positionierung des quer verlaufenden Plattenrandes in Transportrichtung vor dem Festklemmen des Plattenrandes gegen die Querleiste (22) und die Aufnahmen (21).

## Claims

1. Heating station for heating plates (8) of thermoplastics synthetic material for connection upstream of a modulating station (1) for deformation of the plates by means of differential pressure, with a transport device (10), which connects the heating station (7) and moulding station (1), for transferring the heated plate (8) and a device for annularly clamping fast the plate (8) during the heating, wherein an adjustability of this device for adaptation to different sizes of the plate (8) or the foil web section is given and the clamping of the plate (8) takes place at the longitudinal sides by folding strips (17) against the tips of the transport chains (18) guided in the guide rails (19), **characterised by** four mounts (21), which are longitudinally displaceable on the guide rails (19), for two transverse strips (22) guided in telescopic manner in the mounts (21) as well as folding strips (23) mounted at the transverse strips (22) and consisting of clamping strips (24, 25) telescopically displaceable relative to one another.

2. Heating station according to claim 1, **characterised in that** the four mounts (21) are constructed to be synchronously adjustable by way of setting spindles (36).

3. Heating station according to claim 1 or 2, **characterised in that** the clamping strips (24, 25) can be moved into a position above the clamping plane (E).

4. Heating station according to one of claims 1 to 3, **characterised in that** the clamping strips (24, 25) are provided with cooling tubes (31, 32) for conducting a coolant.

5. Heating station according to one of claims 1 to 4, **characterised by** a guide device (33), which is arranged at one of the clamping strips (24, 25), for positioning the transversely extending plate edge in transport direction in advance of clamping the plate edge fast against the transverse strip (22) and the mounts (21).

## Revendications

1. Station de chauffage pour chauffer des plaques (8) en matière thermoplastique destinée à être montée en amont d'une station de formage (1) pour la mise en forme de la plaque par différence de pression, comprenant une installation de transport (10) reliant la station de chauffage (7) et la station de formage (1) pour transférer les plaques chauffées (8) ainsi qu'une installation pour pincer la périphérie de la plaque (8) pendant le chauffage,
l'installation ayant des moyens de réglage pour s'adapter à différentes tailles de plaques (8) ou de segments de film, qui par pincement de la plaque (8) sur les grands côtés à l'aide de barres basculantes (17) les pressent contre les picots de chaîne de transport (18) guidés dans des rails de guidage (19),
**caractérisée par**
quatre organes de réception (21) coulissant longitudinalement sur les rails de guidage (19) pour deux traverses (20) guidées téléscopiquement dans les organes de réception (21) ainsi que des barres basculantes (23) montées sur les traverses (22), ces barres étant formées de barres de serrage (24, 25) coulissant télescopiquement l'une par rapport à l'autre.

2. Station de chauffage selon la revendication 1,
**caractérisée en ce que**
les quatre organes de réception (21) sont réglables en synchronisme par l'intermédiaire de broches de réglage (36).

3. Station de chauffage selon l'une quelconque des revendications 1 et 2,
**caractérisée en ce que**
les barres de serrage (24, 25) peuvent être déplacées jusque dans une position au-dessus du plan de serrage (E).

4. Station de chauffage selon l'une quelconque des revendications 1 à 3,
**caractérisée en ce que**
les barres de serrage (24, 25) sont munies de tubes de refroidissement (31, 32) pour le passage d'un fluide de refroidissement.

5. Station de chauffage selon l'une quelconque des revendications 1 à 4,
**caractérisée par** une installation de guidage (33) montée sur l'une des barres de serrage (24, 25) pour positionner le bord transversal de la plaque par rapport à la direction de transport, avant le serrage bloqué du bord de la plaque contre la traverse (22) et les organes de réception (21).
